# EUROPEAN PATENT SPECIFICATION

(11) **EP 3 973 024 B1**
(45) Date of publication and mention of the grant of the patent: **12.10.2022**
(21) Application number: 21719898.5
(22) Date of filing: 16.04.2021
(51) Int. Cl.: C09D 7/61, C22C 38/04, B22F 1/00, C08K 3/08

(54) **METHOD FOR OBTAINING COLOURED METAL-CONTAINING POWDER, THE POWDER OBTAINED THEREOF AND ITS USE AS METALLIC PIGMENT**
VERFAHREN ZUR HERSTELLUNG EINES GEFÄRBTEN METALLHALTIGEN PULVERS, DAS DAFÜR ERHALTENE PULVER UND DESSEN VERWENDUNG ALS METALLISCHES PIGMENT
PROCÉDÉ D'OBTENTION DE POUDRE COLORÉE CONTENANT DU MÉTAL, POUDRE AINSI OBTENUE ET SON UTILISATION EN TANT QUE PIGMENT MÉTALLIQUE

(30) Priority: 17.04.2020 EP 20382313
(43) Date of publication of application: 30.03.2022
(73) Proprietor: Ferroglobe Innovation, S.L., 28046 Madrid (ES)
(72) Inventor: MÍGUEZ NOVOA, José Manuel, 28046 Madrid (ES); VARELA MIRANDA, Gonzalo, 28046 Madrid (ES); DIÉGUEZ NOVOA, Joaquín, 28046 Madrid (ES); ORDÁS BADÍA, Ramón, 28046 Madrid (ES)
(74) Representative: Ungria López, Javier
(86) International application number: PCT/EP2021/059916
(87) International publication number: WO 2021/209603

(56) References cited:
- CN-A- 107 999 744
- US-A- 3 346 363

## Description

### FIELD OF THE INVENTION

The present invention falls within the scope of the Chemical field, and more specifically relates to new technologies for the manufacture of metal-containing powders having improved colour properties, which are used as metallic pigments. Said powder, as additive, can be used in a wide variety of areas, such as decorative metallic powder for ceramic/surfaces (for instance countertops for kitchens); metallic pigments for paints; additive for coatings, including automotive coatings, plastic coatings (ex. consumer electronics), coil coatings, can coatings, powder coatings, decorative coatings, among others; and additive for cosmetics.

### BACKGROUND OF THE INVENTION

Pigments are normally classified into two main families: organic pigments and inorganic pigments. The metallic pigments belong to this last category.

A pigment is a dyestuff, or a component having a metallic or iridescent appearance, being in the form of a powder (coloured, white or black), and insoluble, unlike the dyes themselves, in the solvents and the substrates. The term metallic pigment covers powders based on aluminum, magnesium, copper, iron (steel), bronze or micaceous derivatives, used as additives, in particular paints and inks.

In addition, it should be noted that the metal pigments known from the prior art are aluminium-based powders, magnesium, copper, iron (or steel), bronze even micaceous derivatives (Schleck R., Pigments, Encyclopedia of Chemical Technology, vol.17, 1982, p.7888). Ferroalloys are not part of this list.

The physical parameters that have an influence and determine the metallic appearance of the powder are: the average particle diameter, shape of the grain, distribution and orientation in the final formulation.

They generally have a particle size of between 5 and 25 microns and a form called flat-flake or straw and are subdivided into two types, according to their wetting behaviour in solvents:
- leafing pigments (or leafing) which remain on the surface of the formulation and are oriented parallel to the interfaces forming a dense metal layer which gives the medium a very high reflectivity and excellent protection; and
- non-film pigments that are oriented more or less parallel to the substrate, randomly and in the bottom layer of the preparation.

Pigments are used for colouring paint, ink, plastic, cosmetics, food and other materials. Most pigments used in manufacturing are dry colorants, usually ground into fine powder. This powder is added to a vehicle (or binder), a relatively neutral or colourless material that suspends the pigment and gives the paint its adhesion.

In WO2005/097915A2, Aurélie Fay proposed the used of silicon and silicon alloys with a layer of silicon oxide to obtain different colours depending on the thickness of that layer. However, the refraction index of the SiO₂ layer was similar to that of normal vehicles (or binders) so no coloured effect was found when processed. In the current invention, the difference in the refraction index between the metallic powders and the binder is enough to appreciate the colour.

Metallic pigments are mainly very sensitive to oxidation phenomena, accentuated by any acidity or alkalinity of the environment. The reactions governing these phenomena are generally inhibited by using oils, waxes, aqueous binders or shellac, which have the effect of physically isolating metals from ambient air and moisture. This addition constitutes an additional constraint for the use of these pigments. For example, patent GB1154933 proposes to coat the metallic powders (bronze, copper, zinc or aluminium) with silicates to protect the surface of the powders from tarnishing. Another example is US2010/0269733 A1, wherein it is described a method in which a platelet-shaped substrate is covered with oxide pigments (metallic effect pigment) and a surface modifier, consisting of an organometallic compound with at least one fluoroalkyl and/or fluoroaryl group.

In relation to coatings, US2017/0306159 A1 relates to a method to obtain coated PVD (Physical Vapor Deposition) particles with metal effect and very good dispersability, allowing for very high concentration suspensions. Despite the fact of the benefits of the process, it is clear that PVD is an expensive process. One example of coloured metal powder is disclosed in CN104312296, wherein a method for modifying the surface of metallic pigments is carried out by introducing hydrophobic components, with the aim of increasing the stability of metallic pigments and providing a self-cleaning effect. The five-step process starts from spherical copper gold powder having micron size, which is sieved and filtered for obtaining flaky powder; and then it is sequentially mixed with solvents and silane agents. The surface of the powder is thus modified by a coating of silicon dioxide and polytetrafluoroethylene.

Another example is disclosed in US2864719, wherein an improved copper-containing bronze powder is prepared in combination with an organic compound selected from a specific group consisting of water insoluble long chain aliphatic and alicyclic hydrocarbon acids containing from 8 to about 32 carbon atoms and a water-insoluble rosinamine.

Other techniques, such atomization, has been used for treating ferromanganese, see US3346363A1 wherein a ferromanganese powder for coating of welding electrodes is prepared by heating and atomizing with steam or pressurized water. However, material obtained by atomization, either in gas or water, it is not considered the optimal approach for obtaining coloured metal-containing particles, as the spherical shape obtained by this metal casting techniques is not suitable for the application due to the poor "metallic effect" of the obtained pigment.

CN107999744 A discloses a method for making passivated ferromanganese (FeMn) powder to be used in coating welding electrodes, comprising: crushing a refined medium-carbon FeMn ball into a powder, and sieving the powder at 80 mesh, corresponding to 177 µm; passivating the powder with an oxidizing solution; heating the passivated powder in a rotary kiln (furnace) in the presence of oxygen at a temperature comprised in the range of 100-1000°C; and sieving the powder at 177 µm. The result is a powder of composite FeMn particles having an outer layer of manganese and/or iron oxides and particle sizes less than 177 µm.

In view of the foregoing documents, the present invention tries to solve the drawbacks detected in the field of the invention. One advantage of the current invention is that no surface modifiers are needed for obtaining the pigment, as the oxide layer giving the colour to the powder that can be used as pigment is part of the substrate or raw material after the treatment.

### DESCRIPTION OF THE INVENTION

The present invention is defined by the claims. Embodiments not falling under the claims are considered to be only illustrative.

The invention relates to a method for producing a (composite) coloured metal-containing powder, which can be used as a metallic pigment, as defined in claim 1.

Said method involves:
a) preparing a bulk metal-containing material in the form of powder (which acts as a particle substrate); wherein the bulk material is a ferromanganese (FeMn) powder; and
b) heating the bulk powder up to a temperature ranging from 100°C to 1000°C in a container, in the presence of oxygen, until an outer layer of manganese oxides and/or iron oxides is formed on the particles of the bulk material powder used as a particle substrate.

When a range of values is disclosed in the present text, it is considered that the lower and higher limits are included as part of the invention.

Said method consists in the above-commented steps, without the need of any further step or action.

Preparing the bulk metal-containing material in step a) must be understood as to obtain or select a raw material that can be used as starting material for obtaining the coloured metal-containing powder by heating in step b). This way, the bulk material having the properties disclosed above can be prepared by one of the following means:
a.1) by grinding or milling a raw material into powder having the intended properties, directly;
a.2) by grinding or milling a raw material into powder, and classifying the milled powder into fractions having the intended properties; or
a.3) classifying a raw material powder into fractions having the intended properties, directly (without grinding or milling).

The first alternative for preparing the raw material by milling or grinding the same is recommended when a small particle size range is intended for the product, for instance higher than 0 and equal to or below 20 µm.

However, it is preferred the second alternative, i.e. milling or grinding a raw FeMn material and subsequently classifying the obtained powder for preparing a homogeneous fraction. Or even the third alternative: just classifying a raw material that already is in the form of powder into fractions.

In a preferred embodiment, the primary grinding or milling action in step a) is carried out by means of a roller mill. For further milling (d50 below 20 microns, for example) the preferred option is a jet mill.

Also in a preferred embodiment, the classification action in step a) is carried out by sieving or by air classification in the case of the smaller sizes, independently of the type of milling or grinding action. Any combination of these classification alternatives with the grinding and milling alternatives is feasible in the present invention.

The colour obtained with this process, which is a "metallic effect", is based on the reflection of light on the smooth surface of the particles. This reflection however is overlayed by the light scattered at the edges of the particles and by the micro-roughness of the pigment surface. Therefore the "metallic effect" is the sum of the reflection and the scattering of light. The higher the ratio of reflected light, the more intense is the metallic effect.

Concerning the chemical composition of the raw material in step a), the bulk metal-containing material which acts as a particle substrate has any content of Fe and Mn in its composition. In a particular embodiment, the raw material may be a high Carbon FeMn (HC FeMn). However, it is preferably a refined ferromanganese (FeMn) powder (i.e. having a content of carbon lower than 2% and a content of manganese around 80%), because it has a lower content of carbon than the non-refined FeMn (for instance, the HC FeMn powder), and consequently a higher metallic shine and a higher aesthetic value. More preferably, said refined FeMn is a medium Carbon FeMn (MC FeMn) or a low Carbon FeMn (LC FeMn) having at least in the composition:
- Mn in an amount between 78-84% w/w of the total composition;
- Fe in an amount between 13-22% w/w of the total composition;
- Si in an amount equal or less than 1.5% w/w of the total composition;
- C in an amount equal or less than 1.5% w/w of the total composition;
- P in an amount equal or less than 0.250% w/w of the total composition; and
- S in an amount equal or less than 0.015% w/w of the total composition.

Regarding the content of hydrogen, it is negligible and not an essential component of the FeMn used in the present disclosure. After the preparation step a), the FeMn material normally has a very low hydrogen content, of less than 10 ppmw. This is due to the lack of contact with water during the casting or sizing process, i.e. during the preparation step a).

The following table 1 summarizes examples of preferred embodiments of the raw ferromanganese powder according to the chemical composition:

**Table 1. Preferred chemical compositions for the ferromanganese powder: high Carbon FeMn (HC FeMn), medium Carbon FeMn (MC FeMn), and low Carbon FeMn (LC FeMn)**

| **%** | | **Mn** | **Si** | **C** | **P** | **S** |
|---|---|---|---|---|---|---|
| HC FeMn (non-refined) | Max. | 80.0 | 1.5 | 8.0 | 0.250 | 0.015 |
| | Min. | 75.0 | - | 6.0 | - | 0.007 |
| | Preferred | 75.5 | 1.0 | 6.5 | 0.200 | 0.010 |
| | Max. | 83 | 1.5 | 1.5 | 0.250 | 0.015 |
| MC FeMn (refined) | Min. | 78 | - | - | - | - |
| | Preferred | 80 | 1.0 | 1.0 | 0.200 | 0.007 |
| LC FeMn (refined) | Max. | 83 | 1.5 | 0.5 | 0.250 | 0.015 |
| | Min. | 78 | - | - | - | - |
| | Preferred | 80 | 1.0 | 0.5 | 0.200 | 0.007 |

The powder of bulk material prepared in step a) preferably has an average particle size of the particle substrate lower than 2 mm, more preferably lower than 1 mm, and even more preferably lower than 450 µm. Other preferred average particle sizes are lower than 315 µm and lower than 250 µm (in all the cases, the average particle size is higher than 0). In another preferred embodiment, the bulk material can have a particle size higher than 0 and equal or lower than 20 µm. Measurements of the particle size are carried out using a sieve for sizes higher than or equal to 45 microns, and using laser diffraction means for a lower size, for instance using a Malvern Hydro 2000.

Besides, the bulk material preferably has a homogeneous particle size of the particle substrate. In the context of the present invention, "homogeneous" means that less than 10% by weight of the total sample has a size lower that the lower limit of the particle size range, and that less than 10% by weight of the total sample has a size higher that the higher limit of the particle size range. The higher the homogeneity of the size, the higher the uniformity of the colour obtained. Hence, after selection a) and before the heating step b), the powder of bulk material can preferably have an homogeneous particle size range (i.e. fraction) between higher than 0 and 1 mm, wherein less than 10% by weight of the powder has a size lower that the lower limit of the particle size range, and that less than 10% by weight of the powder has a size higher that the higher limit of the particle size range. More preferably, the powder of bulk material prepared in step a) shows an homogenous distribution particle size range selected from the following fractions: 125-250 µm, 60-125 µm, 45-60 µm, 20-45 µm, from higher than 0 µm to 20 µm, and from higher than 0 µm to 10 µm. As shall be disclosed below, every one of these fractions may have a different application or use.

Different particle sizes of the prepared raw powder in step a) need different reaction times in the thermal or heating treatment of step b) for obtaining the intended coloured metal-containing powder. That is the reason why it is preferred to select and separate by classification in step a) different fractions of powder having homogeneous particle distribution sizes, in order to treat them separately and to have a more uniform starting material from the point of view of the average size. For instance, the smaller fractions reach the (uniformity of the) intended colours faster, that is to say in shorter periods of time; it is because said smaller fractions generally has a narrower range of particle size (higher homogeneity of the sample) when compared to higher fractions (higher dispersion of the particle size).

The raw ferromanganese powder is made of particles having any shape or morphology (before and after the preparation step). However, the particles preferably have an elongated shape (i.e. one dimension is greater than the other two): i.e. preferably, the particles have a planar shape, as can be a wedge-shape or a flake shape (flat-flake). More preferably, the particles have a flake shape. This shape does not change due to the heating step b) and optimizes the aesthetic effect, due to a more effective reflection of light.

The raw, bulk ferromanganese material (and the corresponding powder prepared in step a)) originally has a silver metallic appearance, whose variations could also be already part of the range of the intended colours for the final coloured metal-containing powder, or it may be changed as a result of the claimed process, depending on the reaction conditions. It is because during the thermal treatment the surface of the powder is oxidized, thus resulting in a change of the colour of the bulk powder.

Regarding the heating step b), the higher the temperature, the lower time needed for reaching the same colour (see Example 6, Table 7). For instance, for a sample of raw FeMn powder having a particle size range of 120-250 microns, the golden colour is reached in 120 minutes when the temperature is of 275ºC; however, it takes only 30 minutes at 350ºC. The same applies for the purple/violet colour: it takes 615 minutes to reach said colour at 275ºC, but only 60 minutes at 350ºC.

Besides, it is observed that, at the same heating conditions (i.e. same temperature), a sample of raw powder having a bigger range of particle size (for instance, between 120-250 microns) needs more time for reaching a specific colour than a sample having a smaller range of particle size (for instance, between 20-45 microns; see Example 6, Table 6), wherein all the particles reach the same colour (homogeneity) faster. In all, the heating time needed for obtaining the material with any intended colour depends on the particle size of the sample, as well as of the own temperature.

The heating step b) is preferably carried out at a temperature between 250ºC and 500ºC, including both limits. More preferably, the step b) is carried out at a temperature between 275ºC and 400ºC, including both limits.

In a preferred embodiment, the container in which the sieved material is heated up in step b) is a furnace, which can be any type of furnace having any type of heating means, such as inductive, resistive and gas furnaces. Preferably the furnace is selected from a group consisting of: batch furnace, continuous furnace, rotating furnace and still furnace. More preferably, it is selected between a rotating furnace and a batch furnace. A rotating furnace is more preferred, since the rotation of the powder allows achieving a more homogeneous heating on step b).

When a batch furnace is used, the raw powder to be treated is deposited in the form of a thin layer on a tray; it should be taken into account that a different coloured metallic powder is obtained depending on the thickness of said layer of bulk material deposited on the tray. That is the reason why the thickness of the layer of raw material that is deposited inside the container is important for the uniformity of the intended colour of the final product. Said thickness varies depending on the selected heating temperature and the selected heating time. Nonetheless, it is preferably a thickness of around 0.5 cm in order to obtain a more homogeneous colour.

The atmosphere inside the furnace during the heating step b) is an atmosphere containing oxygen, and is preferably selected from the group consisting of: air, air enriched with O₂, air with H₂O, a mixture of N₂ and O₂ and pure oxygen.

It is a second objet of the present invention the coloured metal-containing powder obtainable by means of the process disclosed above, which can act as a metallic pigment, in the absence of surface modifiers for obtaining the powder. As a consequence of the heating step b) in the presence of oxygen, the obtained powder is made of composite particles, wherein an outer layer of manganese oxides and/or iron oxides is formed on the original ferromanganese substrate particles used as bulk (starting) material in the process described above. In essence, the particles have a modified surface as a result of the obtaining process. Said obtained powder has the same properties as those disclosed above for the bulk material in relation to particle size and morphology, however, a change in the original colour takes place as a result of a change in the chemical composition, i.e. the formation of oxides. The oxides forms an outer layer but at the same time said layer is embedded in the structure of the substrate or powder, that is to say, the outer layer of oxides is formed without the addition of extra components to the powder of bulk powder.

The outer layer of Mn/Fe oxides produces the colour, and the thickness of said layer of oxides (which is directly related with the content of oxygen, and therefore with the manganese and iron oxides content) that surrounds the particles produces different colours (gold, purple/violet, blue) having different tonalities. This effect is due to the thin film interference. Thin-film interference is a natural phenomenon in which the light waves reflected by the upper and lower boundaries of a thin film interfere with one another, either enhancing or reducing the reflected light, i.e. changing the final reflection. When the thickness of the film is an odd multiple of one quarter-wavelength of the light on it, the reflected waves from both surfaces interfere to cancel each other. Since the wave cannot be reflected, it is completely transmitted instead. When the thickness is a multiple of a half-wavelength of the light, the two reflected waves reinforce each other, increasing the reflection and reducing the transmission. Thus when white light, which consists of a range of wavelengths, is incident on the film, certain wavelengths (colours) are intensified while others are attenuated.

Preferably, the outer layer of the particles has a thickness of between 0.10 and 4.00 microns, more preferably between 0.50 and 3.00 µm. More specifically, in a particular embodiment wherein the colour of the particles is gold, the thickness of the layer is comprised between 0.50-1.20 µm. In another particular embodiment wherein the colour of the particles is violet/purple, the thickness of the layer is comprised between 1.20-2.00 µm. And in another particular embodiment wherein the colour of the particles is blue, the thickness of the layer is comprised between 2.00-3.00 µm.

The X-ray diffraction pattern analysis of the powder shows that the changes of colour from the bulk material (particle substrate) to the final coloured metal-containing powder are due to the fact that the final structure of the powder has no crystalline oxides, just because they are not present at all, or because they are present in a very low percentage, or because the diffractions that they produce are shielded by the metal peaks. Actually, a layer made of oxides is formed in the outer surface, including Fe oxides and/or Mn oxides, having the formula (Mn₂₋ₓFeₓ)O₃. That is to say, the oxide content in the metallic original FeMn bulk powder prepared in step a) is very small (0.1-2.0% depending on the specific surface), and the increase of said content in the surface of the particles is the cause of the change of colour of the final powder: gold, with the lower oxide content, changes to violet when the amount of oxide content increases, and violet changes to blue when the oxide amount reaches the higher content of oxides. The smaller the particle, the higher the % content of the oxides with respect to the final total composition when compared with higher particle sizes, for the same conditions.

Therefore, the final coloured metal-containing powder has an outer layer surrounding the particles and embedded (anchored) in the core thereof, the oxide content being defined by the following formula: (Mn₂₋ₓFeₓ)O₃, wherein 0≤x≤2, since the oxides are amorphous oxides of the MnFeOₓ type. The content of oxygen in the final composition is preferably equal or lower than 27%, and it is more preferably comprised between 0.1% and 27% by weight of the total composition. Said content is concentrated in the surface of the grain powders (also named particles), causing the colour thereof.

This effect is also seen when the refractive index of the final powders are analysed through ATR(FTIR) spectroscopy. The refractive index varies with wavelength, and the refractive indices given in this invention are reported at 633 nm. Said refractive index is preferably comprised between 2.16 and 3.22, and more preferably between 2.16 and 2.91. It was observed that, the refractive index of the powder does not depend on the colour that defines said powder, confirming that the different colours of the powders are due to the different thicknesses of the oxide layer having a chemical formula (Mn₂₋ₓFeₓ)O₃, wherein 0≤x≤2. This range of refractive index is higher if the Fe content in the alloy is higher, too.

Needless to say that, one of the main advantages of the claimed process and powder is the variety of metallic effects that can be obtained: blue, purple/violet, gold and the original metallic colour (silver) of the bulk powder having a golden or a different silver tonality. Also a greyish/greenish colour may be obtained. A metallic powder having intermediate tonalities between the commented colours or any variation between them can be obtained (it needs to be taken into account that the scale of colours obtained is a gradient that varies depending on the conditions applied). One additional advantage of the obtained coloured metal-containing powder is that the golden powder that can be used as metallic pigment is obtained without using bronze, a compound that is only stable below 100°C and has a high instability and a high price. On the contrary, the powder disclosed in the present invention is cheaper and more stable (even up to 250°C).

The present invention also relates to the use of the coloured metal-containing powder defined above (that is to say, obtainable from the method also defined above) as a colouring additive, more specifically as a (metallic) pigment. In particular, the use of the obtained product may vary depending on the particle size of the final powder. For instance, a coloured powder having a particle size higher than 0 µm and equal or lower than 20 µm or higher than 0 µm and equal or lower than 10 µm is suitable as metallic pigment for paints, whereas a powder having a particle size between 125 µm and 250 µm is more suitable for ceramic surface, such as countertops for kitchens or the like.

The coloured metal-containing powder can be one of the followings, for giving powder metallic finish to products comprising the same:
- decorative metallic powder for ceramic products/surfaces, for instance countertops for kitchens;
- metallic pigment for paints;
- additive for coatings (powder coating compositions), including automotive coatings, plastic coatings (ex. consumer electronics), coil coatings, can coatings, powder coatings, decorative coatings, among others; and
- additive for cosmetics.

One of the main advantages of the disclosed powders when used as additive in coatings, paints and agglomerated surfaces, is that the refractive index is much higher than the solvent or binder commonly used for the same purpose. For example, the common refractive index of iron oxides and manganese oxides are in the range of 2.16-3.22 whilst water is 1.33 and epoxy is 1.58. The greater the difference between both, oxides and vehicles, the better it is appreciated the colours.

### FIGURES

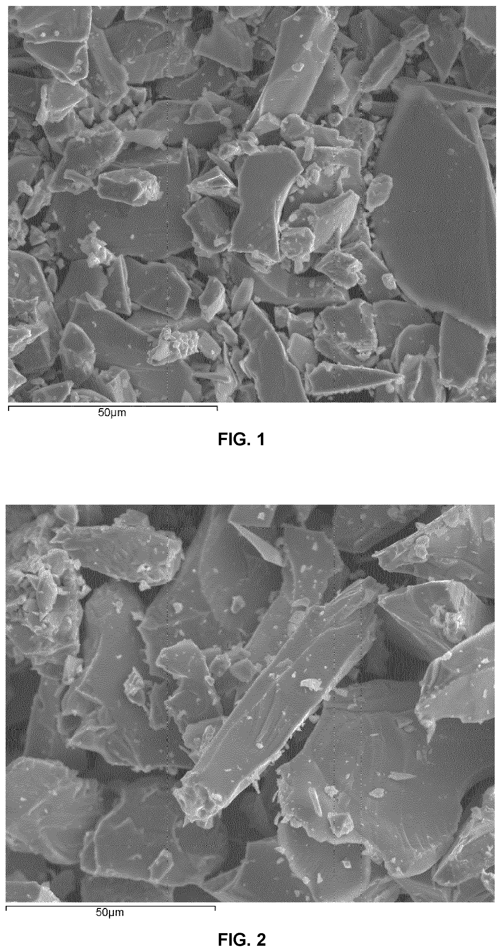

**Figure 1****:** Image taken from an electronic microscope of a FeMn bulk powder prepared in a) for carrying out the heating step b) according to the invention, wherein the flat shape of the particles can be clearly seen. The powder has a particle size range higher than 0 and lower than 20 microns.
**Figure 2****:** Image taken from an electronic microscope of a FeMn bulk powder prepared in a) for carrying out the heating step b) according to the invention, wherein the flat shape of the particles can be clearly seen. The powder has a particle size between 20-45 microns.
**Figure 3****:** Image taken from an electronic microscope of a FeMn bulk powder prepared in a) for carrying out the heating step b) according to the invention, wherein the flat shape of the particles can be clearly seen. The powder has a particle size between 45-60 microns.
**Figure 4****:** Image taken from an electronic microscope of a FeMn bulk powder prepared in a) for carrying out the heating step b) according to the invention, wherein the flat shape of the particles can be clearly seen. The powder has a particle size between 60-120 microns.
**Figure 5****:** Image taken from an electronic microscope of a FeMn bulk powder prepared in a) for carrying out the heating step b) according to the invention, wherein the flat shape of the particles can be clearly seen. The powder has a particle size between 125-250 microns.

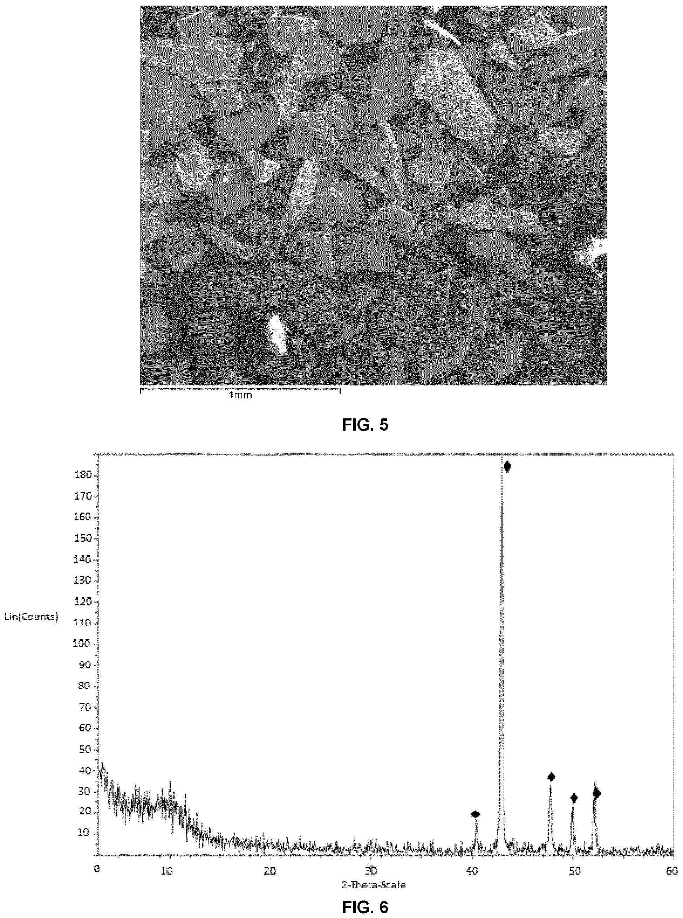

**Figure 6****:** XRD pattern of a sample of metal-containing powder that is a FeMn sample, having a blue colour. It can be clearly seen the peaks of Mn° (see black line), in this case Fe is in solid solution. Four different samples (FeMn having a particle size between 60-120 microns, without treatment; blue FeMn having a particle size between 60-120 microns; purple FeMn having a particle size between 60-120 microns; and gold FeMn having a particle size between 60-120 microns) characterized by the XRD shows similar results: no crystalline oxides are detected, or they appear in a low percentage so that the diffraction it produces is shielded by the metal peaks. In the case of the XRD of Figure 6, the spectrum of the claimed material is shown, and one can see that this is common spectrum of MnO₂; and the Mn as the only crystalline metallic species. Hence, the Fe is in solid solution within the Mn amorphous structure. No peaks of oxides can be seen.
**Figure 7****:** Spectra EDS of the surface of a grain of FeMn Blue powder obtained according to the Example 4 procedure. It is observed the peaks from left to right: peak of oxygen and secondary peak of Mn, forming a double peak; small peak of silicon; very intense peak of Mn; primary peak of Fe (Ka); and secondary peak of Fe (Kb).
**Figure 8****:** SEM image showing a cross section of a grain of coloured powder according to Example 4, i.e. a FeMn blue powder, after polishing. Analysis was carried out via EDS in different points of the grain to compare compositions: position of measurement points 7, 8, 9 and 10 is highlighted in the Figure.
**Figure 9****:** Spectra analysis of four points on the surface of the sample feMn blue powder of Example 4, after polishing.
**Figure 10****:** Diffraction index of the formed layer of oxides (Mn, Fe)Ox in coloured metal-containing powders to different wavelengths.
**Figure 11****:** Graph showing the relationship between the heating time in step b) and the content of oxygen in the surface of ferromanganese material prepared in the form of plates.
**Figure 12****:** TEM image of a violet FeMn particle obtained in Example 7.

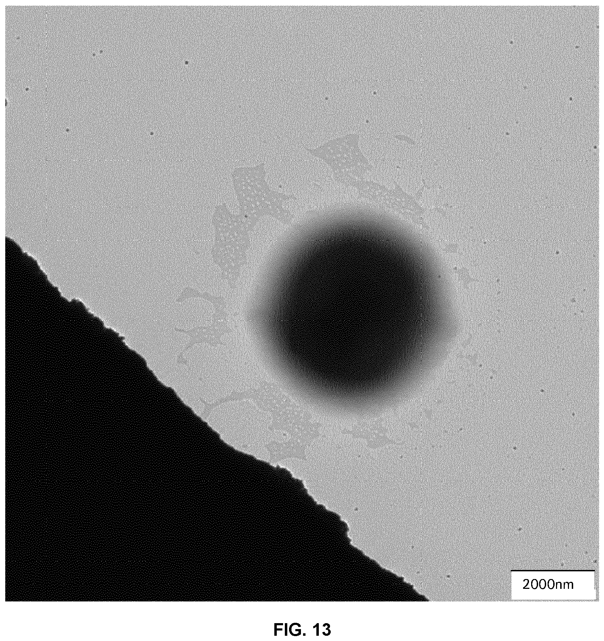

**Figure 13****:** TEM image of a gold FeMn particle obtained in Example 7.

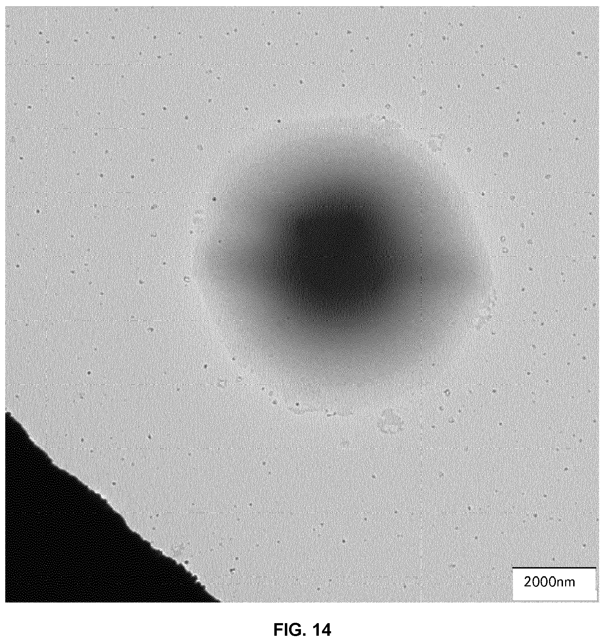

**Figure 14****:** TEM image of a blue FeMn particle obtained in Example 7.

### EXAMPLES

### Example 1: Method for obtaining a golden metal-containing powder according to the invention

1 kg of refined LC FeMn bulk powder having an average particle size equal or below 250 microns is classified by sieving at 45-60 microns, and charged on a tray located inside a furnace in the form of a thin layer of around 0.5 cm. The heating step was carried out on air atmosphere, at 250 °C and during 3 hours. A golden coloured metal-containing powder was obtained.

### Example 2: Method for obtaining a golden metal-containing powder according to the invention

1 kg of refined LC FeMn bulk powder having an average particle size equal or below 250 microns is classified by sieving at 60-125 microns and is charged on a tray located inside a furnace in the form of a thin layer of around 0.5 cm. The heating step was carried out on air atmosphere, at 325 °C and during 15 minutes. A golden coloured metal-containing powder was obtained.

### Example 3: Method for obtaining a purple/violet metal-containing powder according to the invention

1 kg of refined LC FeMn bulk powder having an average particle size equal or below 250 microns is classified by sieving at 125-250 microns and is charged on a tray located inside a furnace in the form of a thin layer of around 0.5 cm. The heating step was carried out on air atmosphere, at 250 °C and during 5 hours. A purple coloured metal-containing powder was obtained.

### Example 4: Method for obtaining a blue metal-containing powder according to the invention

1 kg of refined LC FeMn bulk powder having an average particle size equal or below 250 microns is classified by sieving at 125-250 microns and is charged on a tray located inside a furnace in the form of a thin layer of around 0.5 cm. The heating step was carried out on air atmosphere, at 250°C and during 19 hours. A blue coloured metal-containing powder was obtained.

### Example 5: Relationship between the parameters controlled in the claimed method: characterization of a colouring (gold, violet and blue) FeMn in the form of a plate

The following experiment was carried out in order to check and analyse the relationship between the different parameters implied in the process of the invention. With this aim, different samples of ferromanganese material were prepared in the form of a plate, and the outer surface was analysed (i.e. analysis in the surface as deep as 1.50 µm).

Therefore, after selecting a piece of FeMn alloy, 30x10x3mm plates were sawn, which after a cleaning and degreasing process were polished and subjected to heat treatments in atmospheric electric furnaces according to step b) of the process of the claimed invention. The treatment conditions were the following ones:
- Treated plate having golden colour: FeMn alloy plate stays at 350°C during 90 minutes under air atmosphere conditions.
- Treated plate having purple/violet colour: FeMn alloy plate treated at 350°C during 120 minutes under air atmosphere conditions.
- Treated plate having blue colour: FeMn alloy plate stays at 350°C during 180 minutes under air atmosphere conditions.
Table 2 shows the results obtained in the EDS analysis with an electron beam excitation at 2KeV, which reaches areas of the sample with depths of about 1.5 microns.

**Table 2. Superficial EDS analysis of the FeMn coloured plates**

| **Sample** | **Temp (°C)** | **Time (min)** | **O (%)** | **Mn (%)** | **Fe (%)** | **Si (%)** | **Al (%)** |
|---|---|---|---|---|---|---|---|
| Metallic (original) | NA | 0 | **3,35±2,09** | 76,88±2,04 | 18,17±0,34 | 1,45±0,14 | 0,16±0,10 |
| Gold | 350 | 90 | **22,45±3,63** | 60,90±3,60 | 14,95±1,03 | 0,97±0,15 | 0,62±0,13 |
| Violet | 350 | 120 | **31,50±5,00** | 48,22±2,77 | 11,34±1,22 | 0,90±0,20 | 0,40±0,10 |
| Blue | 350 | 180 | **47,50±2,80** | 41,33±1,99 | 9,94±0,60 | 0,86±0,07 | 0,36±0,06 |

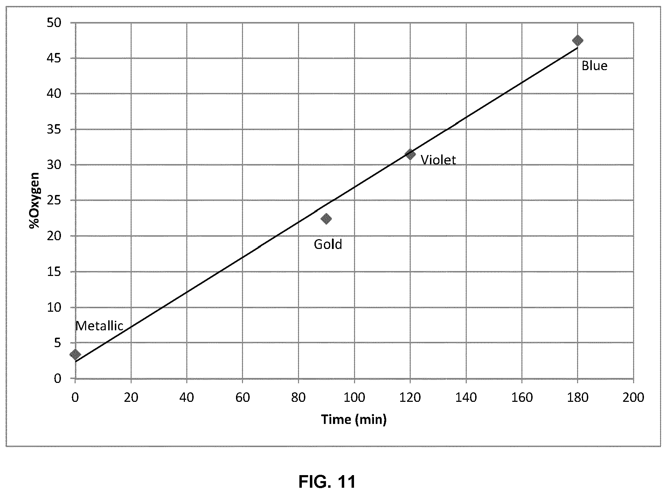

Representing the oxygen content in the outer surface as deep as 1.50 microns vs. the heating time, see Figure 11, it is observed a significant correlation between the two parameters: the higher the heating time, the higher the oxygen content (in the surface of the material). This result confirms that the oxide thickness in the surface is controlled by controlling the heating time, and thus it is possible to reach an intended colour for the FeMn material, as desired.

### Example 6: Characterization of the coloured metal-containing powders obtained in Examples 1-4

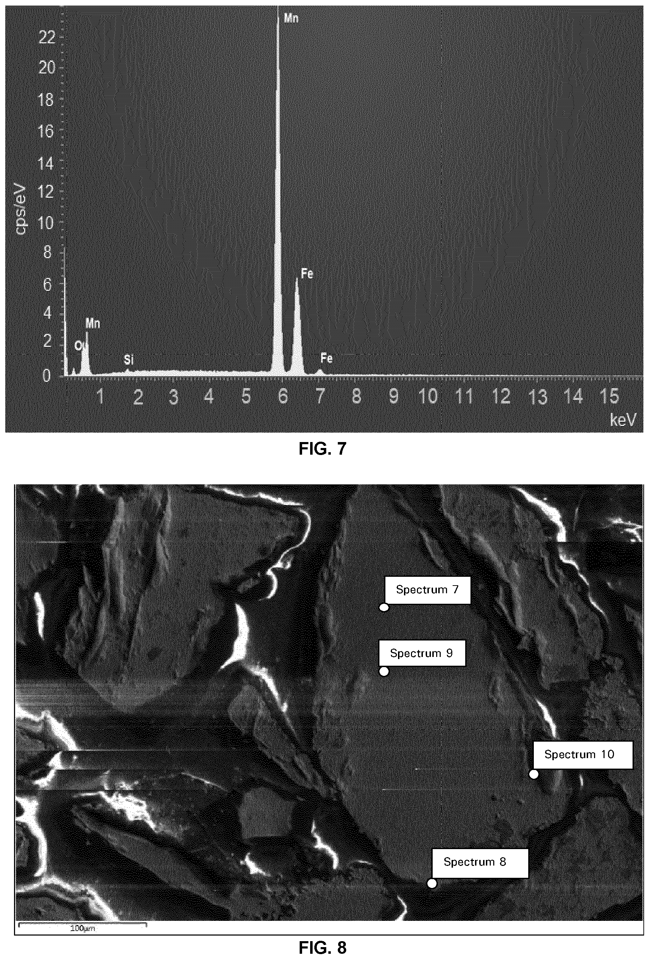

The golden, violet and blue powders, as well as a sample of the bulk, raw metallic powder that was used as starting material, were subjected to Optical microscopy by light reflected (OMLR) and characterised by EDS microanalysis, result being shown in the following table. This analysis is useful to show the trend, even though the absolute values could not be specified. An example of spectra EDS analysis is shown in Figure 7, wherein the surface of a FeMn blue powder is taken as an example.

**Table 3. EDS analysis of the powders prepared according to Examples 1-4, and compared with the composition of the FeMn raw material before starting the process**

| Wt% | FeMn | FeMn gold | FeMn violet | FeMn blue |
|---|---|---|---|---|
| Oxygen | Traces | 3.49±0.35 | 3.91±0.30 | 4.76±0.20 |
| Si° | 1.3±0.29 | 0.87±0.10 | 0.36±0.08 | 0.34±0.06 |
| Mn° | 79.42±0.29 | 76.71±0.41 | 76.34±0.41 | 74.69±0.27 |
| Fe° | 19.03±0.28 | 18.93±0.30 | 19.38±0.34 | 20.31±0.22 |
| (Mn₂₋ₓFeₓ)O₃, where 0≤x≤2* | <0.3 | 11.50 | 12.63 | 15.06 |

| | | | | |
|---|---|---|---|---|
| ** These values were obtained by stoichiometric calculation.* | | | | |

These results show that, for a particle size of 60-120 microns, the amorphous oxide content can reach the 15% by weight of the total composition, increasing in the following order: Gold, Purple/Violet and Blue.

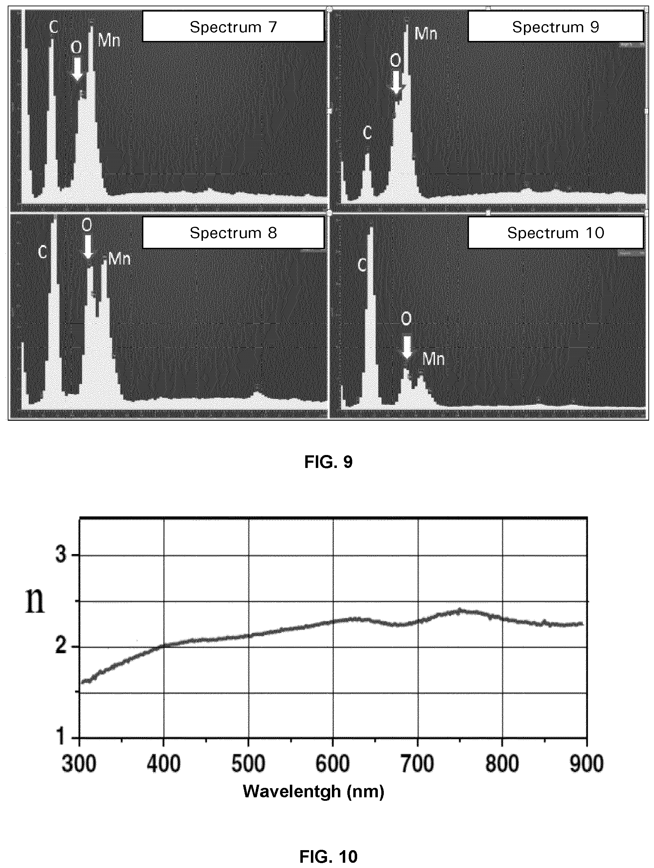

Figure 8 show a SEM-EDS image of the powder named FeMn blue colour, which corresponds to a cross section of one of the grains, analysed on the basis of four different points: Spectrum 7, Spectrum 8, Spectrum 9 and Spectrum 10. Figure 9 shows the results of the analysis in every point of analysis.

**Table 4. Semiquantitative EDS analysis of four points on the surface of a grain of FeMn blue powder after polishing**

| Wt% | Spectrum 7 | Spectrum 8 | Spectrum 9 | Spectrum 10 |
|---|---|---|---|---|
| Oxygen | Traces | 9.04±0.53 | 0.30±0.20 | 43.87±0.71 |
| Siº | 2.42±0.33 | 0.69±0.14 | 0.90±0.30 | 1.27±0.25 |
| Mnº | 79.12±0.93 | 71.02±0.53 | 80.0±0.90 | 42.41±0.64 |
| Feº | 18.48±0.52 | 14.26±0.35 | 18.9±0.54 | 12.45±0.45 |

In Figure 9 it can be seen that the oxygen peak is not observed in spectra of point 7 and 9, however, it is very remarkable in points 8 and 10, which are near to the border of the grain. This result evidences that the Fe and/or Mn oxides are forming an outer layer, and that they are not present in the inner part of the particles of the powder. Depending on time, the thickness increases.

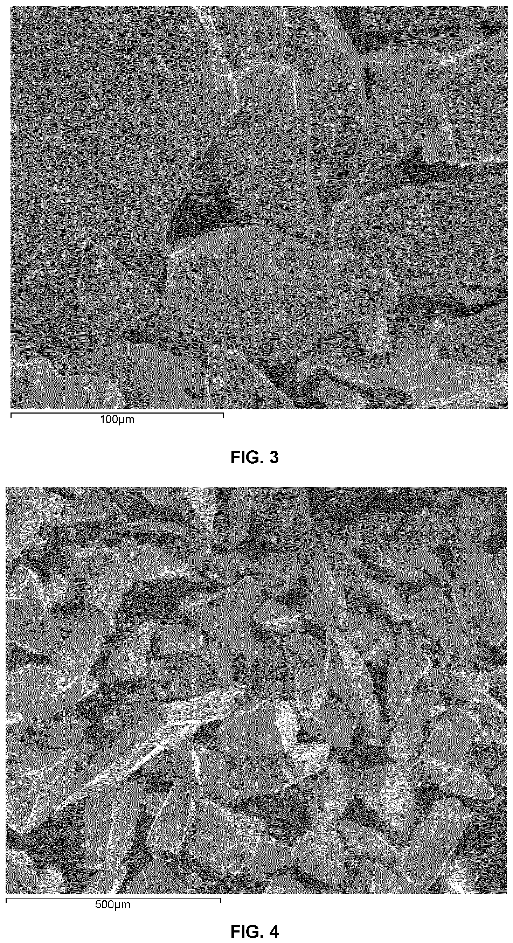

In order to measure the thickness of the oxide layer for the different intended colours, it was made the assumption that as Fe and Mn oxides are less dense than the metal alloy, hence their transparency to electron jets will be higher, and therefore TEM images of the particles can visualise these oxide layers (see figures 3, 4 and 5). Table 5 shows the oxide layer thickness measurements on the different colours.

**Table 5- Thickness of the oxide layer in different colour particles according to the TEM images (µm)**

| **Sample** | **Thickness (µm)** |
|---|---|
| Gold | 1,16 |
| Violet | 1,75 |
| Blue | 2,31 |

**Table 6. Effect of particle size on heating time (T=350ºC)**

| Colour | Particle size | |
|---|---|---|
| | 120-250 microns | 20-45 microns |
| Blue | 240 min | 150 min |
| Gold | 30 min | 30 min |
| Violet/Purple | 60 min | 60 min |

**Table 7. Effect of temperature on heating time (particle size=120-250 microns)**

| Colour | Temperature | |
|---|---|---|
| | 275ºC | 350ºC |
| Blue | NA | 240 min |
| Gold | 120 min | 30 min |
| Violet/Purple | 615 min | 60 min |

Using coloured powders from examples 1-4 with Rama spectroscopy to the following conclusions:
- the oxide formed on the powder particles has a typical MnO₂ spectrum.
- no isolated Fe oxides are detected. Iron is in solid solution in the Mn structure.
- the intensity of the Raman peaks increases in the metallic-golden-violet-blue direction. Therefore the oxide layer must also increase.

**Table 8- Intensity of the Raman peak of the oxide layer on particles (a.u.)**

| **Sample** | **Intensity (u.a.)** |
|---|---|
| Metallic | 48 |
| Gold | 102 |
| Violet | 154 |
| Blue | 258 |

In order to check the relationship between the oxygen content and the specific surface of the particles, they were measured both of them in three different size cuts (45-60 µm, 60-90 µm and 90-120 µm) for the golden colour material or powder, which was obtained in three different sizes: 45-60 µm, 60-90 µm and 90-120 µm.

**Table 9. Oxygen content (%) vs specific surface (m²/g), analysing three different sizes of golden powder**

| **Particle size** | **Oxygen content (%)** | **Specific Surface (m²/g)** |
|---|---|---|
| 45-60 µm | 0.67 | 0.24 |
| 60-90 µm | 0.53 | 0.12 |
| 90-120 µm | 0.52 | 0.06 |

According to these results, one can confirm that, for the same colour, the higher the specific surface area, the higher the oxygen content. And that said content is proportionate to the surface. That is the evidence that the metal oxides are only present in the outer surface of the particles.

### Example 7: Method for obtaining gold, violet and blue metal-containing powders according to the invention

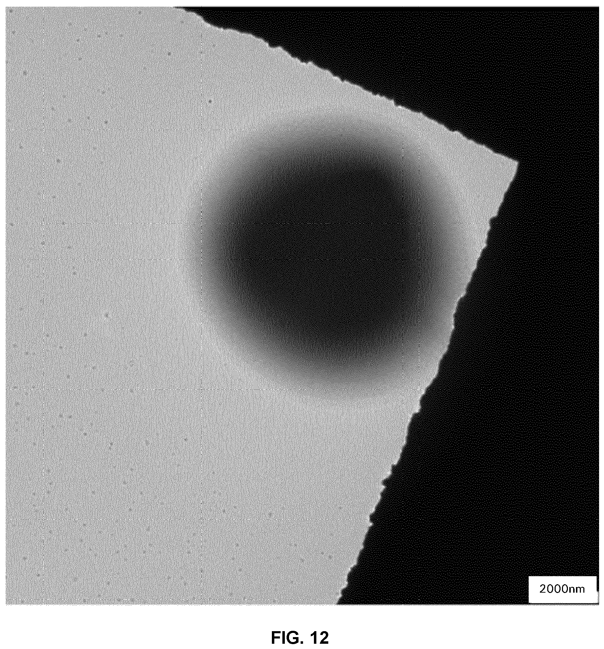

10 kg of refined LC FeMn bulk powder having an average particle size equal or below 250 microns is milled with a jet mill to below 20 microns. The obtained material was charged on three trays located inside a furnace in the form of a thin layer of around 0.5 cm. The heating step was carried out on air atmosphere, at 320°C and during 60, 120 and 240 minutes to obtain powders with gold, purple and blue colours, respectively. Results obtained (TEM image of the particles) are shown in Figures 12 (violet particles), 13 (gold particles) and 14 (blue particles).

## Claims

1. A method for producing a composite coloured metal-containing powder, **characterised in that** said method consists of the following steps, in the absence of surface modifiers:
a) preparing a bulk metal-containing material in the form of powder which acts as a particle substrate by means selected from the group consisting of:
a.1) grinding or milling a raw metal-containing material into powder, directly;
a.2) grinding or milling a raw metal-containing material into powder, and classifying the milled powder into fractions; and
a.3) classifying a raw metal-containing material powder into fractions, directly without grinding or milling;
wherein the bulk metal-containing material is a ferromanganese powder selected from the group consisting of: a high Carbon FeMn, a refined medium Carbon FeMn and a refined low Carbon FeMn; having an elongated shape and an homogeneous particle size selected from the group of fractions consisting of: 125-250 µm, 60-125 µm, 45-60 µm, 20-45 µm, from higher than 0 µm to 20 µm, and from higher than 0 µm to 10 µm, wherein less than 10% by weight of the powder has a size lower that the lower limit of the particle range, and that less than 10% by weight of the powder has a size higher that the higher limit of the particle range, wherein measurements of the particle size are carried out using a sieve for sizes higher than or equal to 45 microns, and using laser diffraction means for a lower size; and
b) heating the bulk metal-containing powder up to a temperature ranging from 100°C to 1000°C in a rotating furnace, in the presence of oxygen during a heating time needed for obtaining the metal-containing powder having one colour selected from the group consisting of: any intermediate tonality between the original colour of the bulk metal-containing powder and gold; gold, violet, blue, and any intermediate tonality between said colours; wherein the heating time is inversely related to the temperature and directly related to the particle size of the bulk powder.

2. The method according to claim 1, wherein the bulk metal-containing material is a refined medium Carbon FeMn or a refined low Carbon FeMn comprising at least in the composition:
- Mn in an amount between 78-84% w/w of the total composition;
- Fe in an amount between 13-22% w/w of the total composition;
- Si in an amount equal or less than 1.5% w/w of the total composition;
- C in an amount equal or less than 1.5% w/w of the total composition;
- P in an amount equal or less than 0.250% w/w of the total composition; and
- S in an amount equal or less than 0.015% w/w of the total composition.

3. The method according to any one of claims 1 or 2, wherein the bulk metal-containing powder is made of particles having a planar shape.

4. The method according to claim 3, wherein the bulk metal-containing powder is made of particles having a flake shape.

5. The method according to any one of claims 1 to 4, wherein the heating step b) is carried out in the presence of an atmosphere containing oxygen selected from the group consisting of: air, air enriched with O₂, a mixture of N₂ and O₂, pure oxygen; and air with H₂O.

6. A coloured metal-containing powder obtainable by means of the method disclosed in any one of the preceding claims, **characterised in that** said powder is made of composite particles having an elongated shape and an outer layer of amorphous manganese oxides and/or iron oxides of the MnFeOₓ type surrounding the surface thereof, the oxide content being defined by the following formula: (Mn₂₋ₓFeₓ)O₃, wherein 0≤x≤2.

7. The coloured metal-containing powder according to claim 6, having a content of oxygen equal or lower than 27% by weight of the total composition of the powder.

8. The coloured metal-containing powder according to any one of claims 6 or 7, wherein the powder has a refractive index comprised between 2.16 and 3.22.

9. The coloured metal-containing powder according to any one of claims 6 to 8, wherein the outer layer has a thickness of between 0.10 to 4.00 µm.

10. Use of the coloured metal-containing powder defined in any one of claims 6 to 9, as a colouring additive.

11. The use of the coloured metal-containing powder according to claim 10, wherein the colouring additive is a metallic pigment.

12. The use of the coloured metal-containing powder according to claim 10, as a colouring additive for one of the products selected from the group consisting of: ceramic products, ceramic surfaces, paints, coatings, plastics, printing materials and cosmetics.

## Patentansprüche

1. Verfahren zur Herstellung eines farbigen metallhaltigen Verbundpulvers, **dadurch gekennzeichnet, dass** das Verfahren in Abwesenheit von Oberflächenmodifikatoren aus folgenden Schritten besteht:
a) Herstellen eines metallhaltigen Schüttgutes bzw. Grundmaterials in Form von Pulver, das als Teilchensubstrat dient, durch Mittel, ausgewählt aus der Gruppe, bestehend aus:
a.1) direktes Zerkleinern oder Mahlen eines rohmetallhaltigen Materials zu Pulver;
a.2) Zerkleinern oder Mahlen eines rohmetallhaltigen Materials zu Pulver und Klassieren des gemahlenen Pulvers in Fraktionen; und
a.3) direktes Klassieren eines rohmetallhaltigen Materials in Fraktionen ohne Mahlen oder Zerkleinern;
wobei das metallhaltige Schüttgut ein Ferromangan-Pulver ist, ausgewählt aus der Gruppe, bestehend aus: einem FeMn mit hohem Kohlenstoffgehalt, einem raffinierten FeMn mit mittlerem Kohlenstoffgehalt und einem raffinierten FeMn mit niedrigem Kohlenstoffgehalt; mit einer länglichen Form und einer homogenen Teilchengröße, ausgewählt aus der Gruppe von Fraktionen, bestehend aus: 125-250 µm, 60-125 µm, 45-60 µm, 20-45 µm, von mehr als 0 µm bis 20 µm und von mehr als 0 µm bis 10 µm, wobei weniger als 10 Gew.-% des Pulvers eine Größe aufweisen, die kleiner ist als die untere Grenze des Teilchenbereichs, wobei weniger als 10 Gew.-% des Pulvers eine Größe aufweisen, die größer ist als die obere Grenze des Teilchenbereichs, wobei Messungen der Teilchengröße unter Verwendung eines Siebs für Größen von mehr als oder gleich 45 Mikrometer und unter Verwendung von Laserbeugungsmitteln für eine kleinere Größe durchgeführt werden; und
b) Erwärmen des metallhaltigen Schüttguts auf eine Temperatur im Bereich von 100°C bis 1000°C in einem Drehrohrofen in Gegenwart von Sauerstoff während einer Erwärmungsdauer, die erforderlich ist, um das metallhaltige Pulver mit einer Farbe zu erhalten, ausgewählt aus der Gruppe, bestehend aus: einem beliebigen Zwischenton zwischen der ursprünglichen Farbe des metallhaltigen Schüttguts und Gold; Gold, Violett, Blau und einem beliebigen Zwischenton zwischen den Farben; wobei die Erwärmungsdauer im umgekehrten Verhältnis zur Temperatur und im direkten Verhältnis zur Teilchengröße steht.

2. Verfahren nach Anspruch 1, wobei das metallhaltige Schüttgutmaterial ein raffiniertes FeMn mit mittlerem Kohlenstoffgehalt oder ein raffiniertes FeMn mit niedrigem Kohlenstoffgehalt ist, umfassend in der Zusammensetzung mindestens:
- Mn in einer Menge zwischen 78-84 % w/w der Gesamtzusammensetzung;
- Fe in einer Menge zwischen 13-22 % w/w der Gesamtzusammensetzung;
- Si in einer Menge von gleich oder weniger als 1,5 % w/w der Gesamtzusammensetzung;
- C in einer Menge von gleich oder weniger als 1,5 % w/w der Gesamtzusammensetzung;
- P in einer Menge von gleich oder weniger als 0,250 % w/w der Gesamtzusammensetzung; und
- S in einer Menge gleich oder weniger als 0,015 % w/w der Gesamtzusammensetzung.

3. Verfahren nach einem der Ansprüche 1 oder 2, wobei das metallhaltige Schüttgut aus Teilchen mit einer flachen Form hergestellt wird.

4. Verfahren nach Anspruch 3, wobei das metallhaltige Schüttgut aus Teilchen mit einer Flockenform hergestellt wird.

5. Verfahren nach einem der Ansprüche 1 bis 4, wobei der Erwärmungsschritt b) in Gegenwart einer sauerstoffhaltigen Atmosphäre durchgeführt wird, ausgewählt aus der Gruppe bestehend aus: Luft, mit O₂ angereicherter Luft, einer Mischung aus N₂ und O₂, reinem Sauerstoff und Luft mit H₂O.

6. Farbiges metallhaltiges Pulver, erhältlich durch das in einem der vorhergehenden Ansprüche offenbarte Verfahren, **dadurch gekennzeichnet, dass** das Pulver aus Verbundteilchen mit einer länglichen Form und einer äußeren Schicht aus amorphen Manganoxiden und/oder Eisenoxiden vom Typ MnFeOₓ, die die Oberfläche davon umgeben, besteht, wobei der Oxidgehalt durch die folgende Formel definiert ist: (Mn₂₋ₓFeₓ)O₃, wobei 0≤x≤2.

7. Farbiges metallhaltiges Pulver nach Anspruch 6 mit einem Sauerstoffgehalt von 27 Gew.-% oder weniger, bezogen auf die Gesamtzusammensetzung des Pulvers.

8. Farbiges metallhaltiges Pulver nach einem der Ansprüche 6 oder 7, wobei das Pulver einen Brechungsindex zwischen 2,16 und 3,22 aufweist.

9. Farbiges metallhaltiges Pulver nach einem der Ansprüche 6 bis 8, wobei die äußere Schicht eine Dicke zwischen 0,10 und 4,00 µm aufweist.

10. Verwendung des farbigen metallhaltigen Pulvers nach einem der Ansprüche 6 bis 9 als färbendes Additiv.

11. Verwendung des farbigen metallhaltigen Pulvers nach Anspruch 10, wobei das färbende Additiv ein Metallpigment ist.

12. Verwendung des farbigen metallhaltigen Pulvers nach Anspruch 10 als färbendes Additiv für eines der Produkte, ausgewählt aus der Gruppe, bestehend aus: keramischen Produkten, keramischen Oberflächen, Farben, Beschichtungen, Kunststoffen, Druckmaterialien und Kosmetika.

## Revendications

1. Procédé pour la production d'une poudre contenant du métal colorée composite, **caractérisé en ce que** ledit procédé consiste en les étapes suivantes, en l'absence de modificateurs de surface :
a) préparation d'un matériau en vrac contenant du métal dans la forme de poudre qui agit comme un substrat de particule au moyen choisi dans le groupe consistant en :
a.1) broyage ou mouture d'un matériau brut contenant du métal en une poudre, directement ;
a.2) broyage ou mouture d'un matériau brut contenant du métal en une poudre, et tamisage de la poudre broyée en fractions ; et
a.3) tamisage d'une poudre de matériau brut contenant du métal en fractions, directement sans broyage ni mouture ;
dans lequel le matériau en vrac contenant du métal est une poudre de ferromanganèse choisie dans le groupe consistant en : un FeMn à teneur élevée en carbone, un FeMn à teneur moyenne en carbone raffiné et un FeMn à faible teneur en carbone raffiné ; ayant une forme allongée et une taille de particule homogène choisie dans le groupe de fractions consistant en : 125-250 µm, 60-125 µm, 45-60 µm, 20-45 µm, de plus de 0 µm à 20 µm, et de plus de 0 µm à 10 µm, dans lequel moins de 10 % en masse de la poudre présentent une taille inférieure à la limite inférieure de l'intervalle de particule, et moins de 10 % en masse de la poudre présentent une taille supérieure à la limite supérieure de l'intervalle de particule, dans lequel les mesures de la taille de particule sont réalisées en utilisant un tamis pour des tailles supérieures ou égales à 45 microns, et en utilisant un moyen de diffraction au laser pour une taille inférieure ; et
b) chauffage de la poudre en vrac contenant du métal jusqu'à une température de 100°C à 1 000°C dans un four rotatif, en présence d'oxygène pendant une durée de chauffage nécessaire pour l'obtention de la poudre contenant du métal ayant une couleur choisie dans le groupe consistant en : toute tonalité intermédiaire entre la couleur d'origine de la poudre en vrac contenant du métal et l'or ; l'or, le violet, le bleu, et toute tonalité intermédiaire entre lesdites couleurs ; dans lequel la durée de chauffage est inversement liée à la température et directement liée à la taille de particule de la poudre en vrac.

2. Procédé selon la revendication 1, dans lequel le matériau en vrac contenant du métal est un FeMn à teneur moyenne en carbone raffiné ou un FeMn à faible teneur en carbone raffiné comprenant au moins dans la composition :
- Mn dans une quantité de 78-84 % masse/masse de la composition totale ;
- Fe dans une quantité de 13-22 % masse/masse de la composition totale ;
- Si dans une quantité inférieure ou égale à 1,5 % masse/ masse de la composition totale ;
- C dans une quantité inférieure ou égale à 1,5 % masse/ masse de la composition totale ;
- P dans une quantité inférieure ou égale à 0,250 % masse/ masse de la composition totale ; et
- S dans une quantité inférieure ou égale à 0,015 % masse/ masse de la composition totale.

3. Procédé selon l'une quelconque des revendications 1 ou 2, dans lequel la poudre en vrac contenant du métal est constituée de particules ayant une forme planaire.

4. Procédé selon la revendication 3, dans lequel la poudre en vrac contenant du métal est constituée de particules ayant une forme de flocon.

5. Procédé selon l'une quelconque des revendications 1 à 4, dans lequel l'étape de chauffage b) est réalisée en présence d'une atmosphère contenant de l'oxygène choisie dans le groupe consistant en : air, air enrichi en O₂, un mélange de N₂ et O₂, oxygène pur ; et air avec H₂O.

6. Poudre contenant du métal colorée pouvant être obtenue au moyen du procédé décrit dans l'une quelconque des revendications précédentes, **caractérisée en ce que** ladite poudre est constituée de particules composite ayant une forme allongée et une couche externe d'oxydes de manganèse et/ou oxydes de fer du type MnFeOₓ amorphes entourant leur surface, la teneur en oxyde étant définie par la formule suivante : (Mn₂₋ₓFeₓ)O₃, dans laquelle 0≤x≤2.

7. Poudre contenant du métal colorée selon la revendication 6, ayant une teneur en oxygène inférieure ou égale à 27 % en masse de la composition totale de la poudre.

8. Poudre contenant du métal colorée selon l'une quelconque des revendications 6 ou 7, dans laquelle la poudre présente un indice de réfraction de 2,16 à 3,22.

9. Poudre contenant du métal colorée selon l'une quelconque des revendications 6 à 8, dans laquelle la couche externe présente une épaisseur de 0,10 à 4,00 µm.

10. Utilisation de la poudre contenant du métal colorée définie dans l'une quelconque des revendications 6 à 9, comme un additif colorant.

11. Utilisation de la poudre contenant du métal colorée selon la revendication 10, dans laquelle l'additif colorant est un pigment métallique.

12. Utilisation de la poudre contenant du métal colorée selon la revendication 10, comme un additif colorant pour un des produits choisis dans le groupe consistant en : produits céramiques, surfaces céramiques, peintures, revêtements, plastiques, matériaux d'impression et cosmétiques.
